# EUROPEAN PATENT APPLICATION

(11) **EP 4 644 961 A1**
(43) Date of publication of application: **05.11.2025**
(21) Application number: 25172385.4
(22) Date of filing: 24.04.2025
(51) Int. Cl.: G02B 6/44

(54) **FIBER STORAGE ASSEMBLIES, SYSTEMS, AND METHODS**

(30) Priority: 30.04.2024 US 202463640484 P
(71) Applicant: CORNING RESEARCH & DEVELOPMENT CORPORATION, Corning NY 14831 (US)
(72) Inventor: Allen, William George, Texas, 78750 (US)
(74) Representative: Elkington and Fife LLP

(57) **Abstract**

In one embodiment, a fiber storage assembly includes a slack storage tray and one or more splice trays pivotally coupled to the slack storage tray. The slack storage tray defines a slack storage volume configured to store fiber slack of an optical fiber. The one or more splice trays are moveable between a closed configuration enclosing the slack storage volume and open configuration exposing the slack storage volume.

## Description

### RELATED APPLICATIONS

This application claims the benefit of priority of U.S. Provisional Application Serial No. 63/640,484 filed on April 30, 2024, the content of which is relied upon and incorporated herein by reference in its entirety.

### FIELD

The present specification generally relates to fiber storage assemblies, systems, and methods for optical fiber splicing, storage, and/or organization.

### BACKGROUND

Fiber optic communications use fiber optic cables which house a plurality of optical fibers. To facilitate communication, fibers of one optical cable are spliced to another. Not all the optical fibers may be spliced or fibers may be re-spliced in the future to facilitate desired communication paths. Accordingly, some fiber slack is maintained to facilitate future splicing or updates. While such slack needs to be available it is often difficult to store the fiber slack while allowing the fiber slack to remain easily accessible to a technician. Moreover, with increasing fiber counts and new fiber construction, such as rollable ribbon cables, there is a need to organize and splice larger numbers of fibers. For example, super high fiber count cables (e.g., 6,912 fiber counts and above) may be unwieldy to maintain using traditional structures.

Accordingly, a need exists for new fiber storage assemblies for optical fiber routing, splicing, and storage to provide for better splicing, storage, and/or organization.

### SUMMARY

In one embodiment, a fiber storage assembly includes a slack storage tray and one or more splice trays pivotally coupled to the slack storage tray. The slack storage tray defines a slack storage volume configured to store fiber slack of an optical fiber. The one or more splice trays are moveable between a closed configuration enclosing the slack storage volume and open configuration exposing the slack storage volume.

In another embodiments, a fiber storage assembly includes a slack storage tray, a first splice tray pivotally coupled to the slack storage tray, and a second splice tray pivotally coupled to the slack storage tray opposite the first splice tray. The slack storage tray defines a slack storage volume configured to store fiber slack of an optical fiber. Each of the first splice tray and the second splice tray are rotatable from a closed configuration toward one another and an open configuration away from one another.

In yet another embodiment, a method for routing an optical fiber within a fiber storage system includes arranging a slack portion of the optical fiber within a slack storage tray, routing a splice portion of the optical fiber to a first splice tray pivotally coupled to the slack storage tray or a second splice tray pivotally coupled to the slack storage tray and securing the splice portion within the first splice tray or the second splice tray, and pivoting the first splice tray and the second splice tray to a closed configuration such that the splice portion faces the slack portion

These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 depicts a fiber storage assembly including a slack storage tray and one or more splice trays, according to one or more embodiments shown and described herein;
FIG. 2 depicts the fiber storage assembly of FIG. 1 with one splice tray moved to a closed configuration, according to one or more embodiments shown and described herein;
FIG. 3 depicts a cross-section of the fiber storage assembly of FIG. 2 taken along line 3-3, according to one or more embodiments shown and described herein;
FIG. 4 depicts the fiber storage assembly of FIG 1 with a first splice tray and a second splice tray moved to a closed configuration, according to one or more embodiments shown and described herein;
FIG. 5 depicts a top view of the fiber storage assembly of FIG. 1 schematically illustrating fiber routing, according to one or more embodiments shown and described here
FIG. 6 depicts a top view of the slack storage tray illustrating a first slack storage zone, a second slack storage zone, and a third slack storage zone, according to one or more embodiments shown and described herein;
FIG. 7 depicts a perspective view of a flexible fiber guide, according to one or more embodiments shown and described herein;
FIG. 8A depicts a plurality of fiber storage assemblies coupled to a bracket as a fiber storage system, according to one or more embodiments shown and described herein;
FIG. 8B depicts a side the fiber storage system of FIG. 8A, according to one or more embodiments shown and described herein;
FIG 8C depicts a side perspective view of the fiber storage system of FIGS. 8A and 8B, according to one or more embodiments shown and described herein; and
FIG. 9 depicts a method of routing fibers through a fiber storage assembly, according to one or more embodiments shown and described herein.

### DETAILED DESCRIPTION

Embodiments of the present disclosure are directed to fiber storage assemblies, systems, and methods to provide improved fiber splicing, storage, and/or organization. For example, in one embodiment, a fiber storage assembly includes a slack storage tray and one or more splice trays pivotally coupled to the slack storage tray. The slack storage tray defines a slack storage volume configured to store a fiber slack of a fiber cable. The one or more splice trays are moveable between a closed configuration enclosing the slack storage volume and open configuration exposing the slack storage volume. As will be described herein, by providing such structure, the fiber slack can be stored while providing convenient access for a technician creating or modifying spliced connections held by the one or more splice trays. For example, in conventional trays spliced connections and slack storage occupy the same real estate within a combined housing, leading to difficulty in managing slack and splices simultaneously. However, by separating splice storage and slack storage areas while still having simultaneous access to both allows from easier management, manipulation, splicing, etc. of a large number of fibers, thereby increasing productivity.

Furthermore, and as will be described in greater detail, fiber storage assemblies (also referred to as sub-unit assemblies) may be included within a system that arranges a plurality of fiber storage assemblies to allow a technician to quickly and efficiently sort through and access desired fibers and/or splices. Accordingly, high fiber count cables may not only be split above splice trays, but also among a plurality of sub-unit assemblies, thereby providing for improved organization and access.

These and additional features and benefits will be described in greater detail below.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

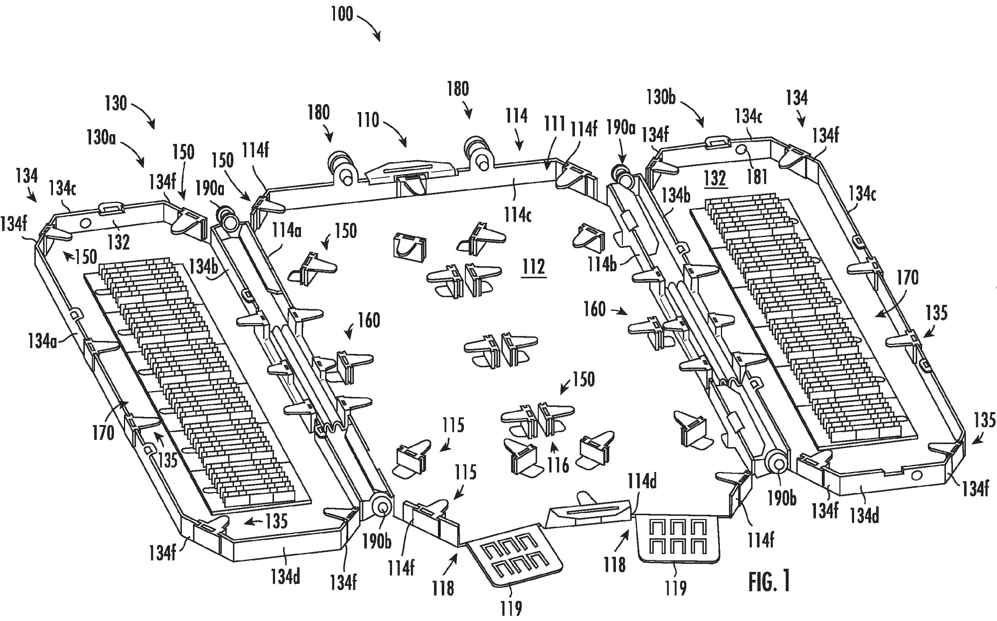

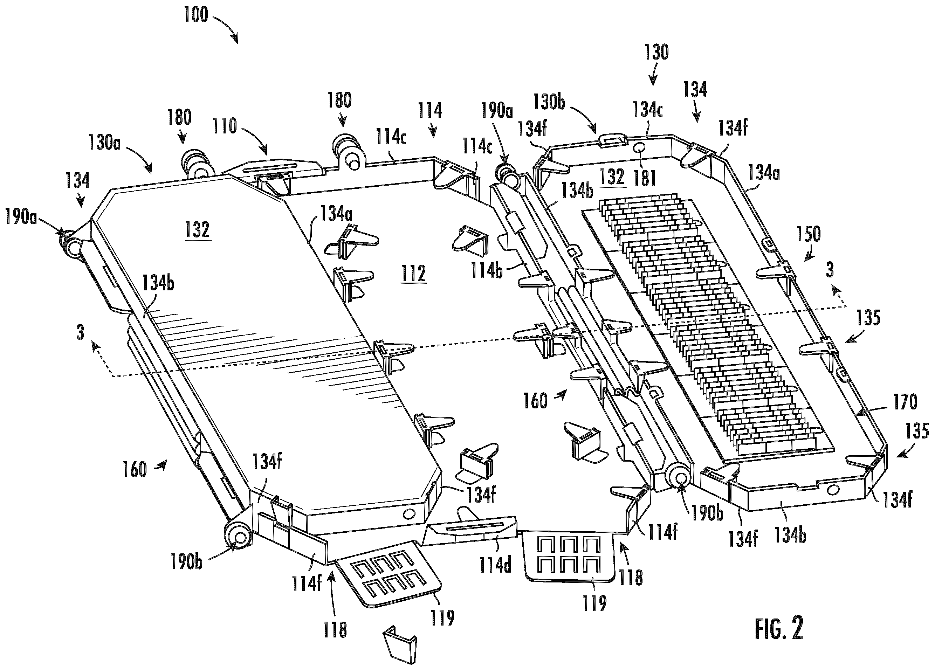

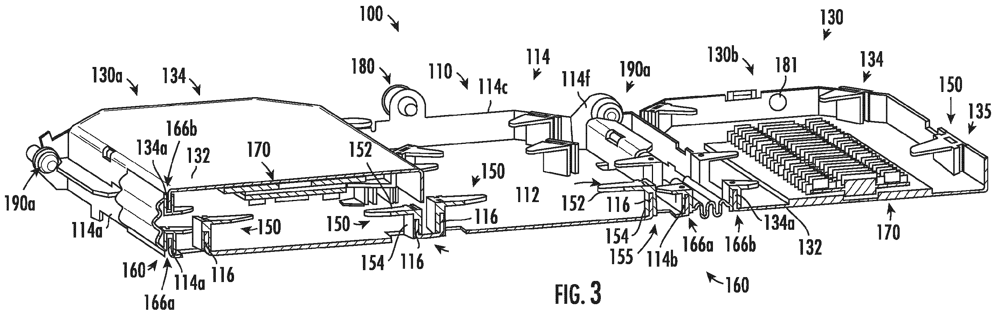

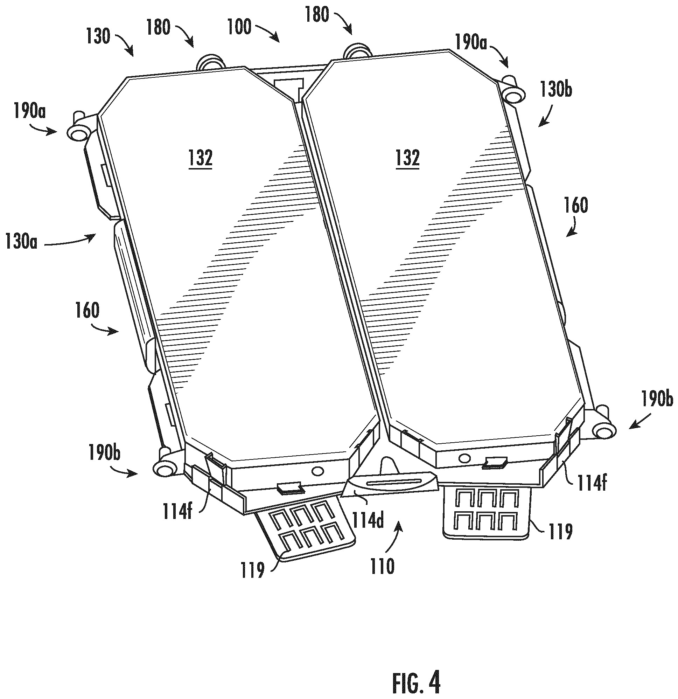

Referring now to FIG. 1, a fiber storage assembly 100 is generally depicted in an open configuration. The fiber storage assembly 100 is shown in a partially closed configuration in FIGS. 2 and 3 and a fully closed configuration in FIG. 4. Referring collectively to FIGS. 1-4, the fiber storage assembly 100 includes a slack storage tray 110 and one or more splice trays 130 pivotally coupled to the slack storage tray 110. For example, the depicted fiber storage assembly 100 includes a first splice tray 130a and a second splice tray 130b. However, it is noted that embodiments according to the present disclosure may include any number of splice trays such as, one splice tray, two splice trays, three splice trays, etc. Each of the one or more splice trays 130 may fold toward the slack storage tray 110 to enclose a slack storage volume 111 defined by the slack storage tray 110. Though any number of folding configurations are contemplated and possible, in embodiments, such folding configurations may include a two-layer tri-fold (such as depicted in the figures), a two layer bi-fold (such as where there is a single splice tray), a 3 layer trifold (such as where one splice tray folds over a second splice tray), or the like. The fiber storage assembly 100 may further include a plurality of clips 150, one or more flexible guides 160, one or more splice holders 170, and/or one or more latches 180. Embodiments may include a greater or fewer number of components than shown without departing from the scope of the present disclosure

The slack storage tray 110 may generally include a base substrate 112 and one or more side walls 114 coupled to the base substrate 112 that collectively define the slack storage volume 111. The one or more side walls 114 may extend from the base substrate 112 so as to define a depth of the slack storage volume 111. The base substrate 112 may be any regular or irregular, polygonal or non-polygonal shape. In embodiments, the one or more side walls 114 may extend from the base substrate 112 along a terminal edge of the base substrate 112. The one or more side walls 114 may be substantially continuous about the perimeter of the base substrate 112. In other embodiments, the one or more side walls 114 may have discontinuities formed therein. For ease of description and not to limit orientation, the one or more side walls 114 may include a first longitudinal side wall 114a, a second longitudinal side wall 114b opposite the first longitudinal sidewall 114a, a first lateral side wall 114c, and second lateral side wall 114d opposite the first lateral side wall 114c. In embodiments, the first and second longitudinal and lateral side walls (114a-114d) may be connected via a plurality of connecting walls 114f or directly to one another. The plurality of connecting walls 114f may be angled at some oblique angle relative to the first and second longitudinal side walls 114a, 114b and the first and second lateral side walls 114c, 114d The plurality of side walls 114 may all be the same height or different heights from one another relative to the base substrate 112. Accordingly, the depth of the slack storage volume 111 may be consistent or varied across the fiber storage assembly 100. It is noted that while the one or more side walls 114 are illustrated as including a plurality of straight sections, the one or more side walls 114 may be curved or have curved portions.

The one or more side walls 114 may be integral with the base substrate 112 or coupled to the base substrate 112 through one or more manufacturing methods such as welding, brazing, fastening, adhering, etc. In embodiments, the base substrate 112 and the one or more side walls 114 may be formed such as via suitable manufacturing process such as, but not limited to a molding or stamping process. In some embodiments, the base substrate 112 and the one or more side walls 114 may be injection molded. In embodiments, the slack storage tray 110 may be formed of metal, polymer, or any other suitable material.

The one or more side walls 114 and the base substrate 112 may define a plurality of clip mounting locations 115. For example, a clip mounting location 115 may include any portion of the one or more side walls 114. In some embodiments, specific spots on the one or more side walls 114 may be marked or otherwise indicated as a clip mounting location. In particular, a clip of the plurality of clips 150 may be mounted to the side wall 114 at a clip mounting location 115. Similarly the base substrate 112 may define a plurality of clip mounting locations 115. For example, extending from the base substrate 112 may be a plurality of tabs 116. Such tabs 116 may be coupled to the base substrate 112 or formed via a molding, punching, or cutting and bending operation. For example, in embodiments, the tabs 116 may be formed from cutting the base substrate 112 to form a cantilevered tab and bending the cantilevered tab to an erect orientation. This is best depicted in FIG. 3. In other embodiments the tabs 116 may be welded, soldered, or the like to the base substrate 112. The tabs 116 may stand erect from the base mounting substrate so as to receive a clip 150. The plurality of clips 150 are described in greater detail below.

The one or more side walls 114 may have openings formed therein. For example, the one or more side walls 114 may define pass-throughs. For example, the second lateral side wall 114c may define one or more fiber entries/exits 118. For example, two fiber entries, though a greater number of fiber entries are contemplated and possible. In embodiments, fibers may enter into the slack storage tray 110 through the one or more fiber entries/exits 118 and be routed to desired splice locations within the one or more splice trays 130. In embodiments, an elongated platform 119 may extend from the slack storage tray 110 adjacent the fiber entries and provide support to the fibers extending into the slack storage tray 110. In embodiments, the elongated platforms may define securing features (e.g., holes, tabs, etc.) to which fibers or fiber bundles may be secured, such as with ties (e.g., strings, robes, twist ties, zip ties, cable ties, or the like).

Still referring to FIG. 1, the one or more splice trays 130 may be pivotally coupled to the slack storage tray 110. In the depicted embodiment, there is a first splice tray 130a and a second splice tray 130b. In other embodiments, there may be only one splice tray. In yet further embodiments, there may be more than two splice trays. Each splice tray 130 may be pivotally coupled to the slack storage tray 110 such as via a hinge, such as one or more hinges, such as at least two hinges, or the like. In some embodiments, each splice tray 130 may be pivotally coupled to the slack storage tray 110 such as via a flexible joint as opposed to a hinge.

Each splice tray 130 may generally include a splice tray base wall 132 and one or more splice tray side walls 134 coupled to the splice tray base wall 132 that collectively defines the splice storage volume 131. The one or more splice tray side walls 134 may extend from the splice tray base wall 132 so as to define a depth of the splice storage volume 131. The splice tray base wall 132 may be any regular or irregular, polygonal or non-polygonal shape. In embodiments, the one or more splice tray side walls 134 may extend from the splice tray base wall 132 along a terminal edge of the splice tray base wall 132. The one or more splice tray side walls 134 may be substantially continuous about the perimeter of the splice tray base wall 132. In other embodiments, the one or more splice tray side walls 134 may have discontinuities formed therein. For ease of description and not to limit orientation, the one or more splice tray side walls 134 may include a first longitudinal side wall 134a, a second longitudinal side wall 134b opposite the first longitudinal sidewall 134a, a first lateral side wall 134c, and second lateral side wall 134d. In embodiments, the first and second longitudinal and lateral side walls (114a-114d) may be connected via a plurality of connecting walls 134f or directly to one another. The plurality of connecting walls 134f may be angled at some oblique angle relative to the first and second longitudinal and lateral side walls (114a-114d). The one or more splice tray side walls 134 may all be the same height or different heights from one another relative to splice tray base wall 132. Accordingly, the depth of the splice storage volume 131 may be consistent or varied within the fiber storage assembly 100. It is noted that while the one or more splice tray side walls 134 are illustrated as including a plurality of straight sections, one or more splice tray side walls 134 may be curved or include curved portions.

The one or more splice tray side walls 134 may be integral with the splice tray base wall 132 or coupled to the splice tray base wall 132 through one or more manufacturing methods such as welding, brazing, fastening, adhering, etc. In embodiments, the splice tray base wall 132 and the one or more splice tray side walls 134 may be formed such as via any suitable manufacturing process such as, but not limited to a molding or stamping process, such as a single substrate. In some embodiments, the splice tray base wall 132 and the one or more splice tray side walls 134 may be injection molded. In embodiments, the one or more splice trays 130 may be formed of metal, polymer, or any other suitable material.

The one or more splice tray side walls 134 may define a plurality of clip mounting locations 135 similar to the slack storage tray 110. For example, a clip-mounting location 135 may include any portion of one or more splice tray side walls 134. In some embodiments, specific spots on one or more splice tray side walls 134 may be marked or otherwise indicated as a clip mounting location 135. In particular, a clip of the plurality of clips 150 may be mounted to the side wall 134 at a clip mounting location 135. The plurality of clips 150 are described in greater detail below.

Coupled to the splice tray base wall 132 may be one or more splice holders 170 (e.g., fusion slice sleeve holders or any type of splice connection holder). The one or more splice holders 170 may be configured to hold an array of spliced connections such as via sleeves or other retaining features (e.g., tabs, or the like). In some embodiments, the one or more splice holders 170 may be mounted to the splice tray base wall 132 via any suitable connection (e.g., adhesives, fasteners, welding, brazing, snap fits, or the like). In some embodiments, the one or more splice holders 170 may be connectable to the splice tray base wall 132 in a modular fashion such that different splice trays may include various configurations of splice holders 170 which may be modified or adjusted by a user or technician based on needs.

While each splice tray 130 depicted is illustrated as identical. It is noted that the splice trays 130 need not be identical to one another but may include various features based on particular application needs.

As noted above, each splice tray 130 may be coupled to the slack storage tray 110 via one or more hinges or other flexible connection. In the depicted embodiment, each splice tray 130 is coupled to the slack storage tray 110 via a first hinge 190a at the top of the longitudinal side walls 114a, 114b and a second hinge 190b at a bottom of the longitudinal side walls 114a, 114b. The first and second hinges 190a, 190b may have any suitable form so as to rotatably couple the one more splice trays 130 to the slack storage tray 110.

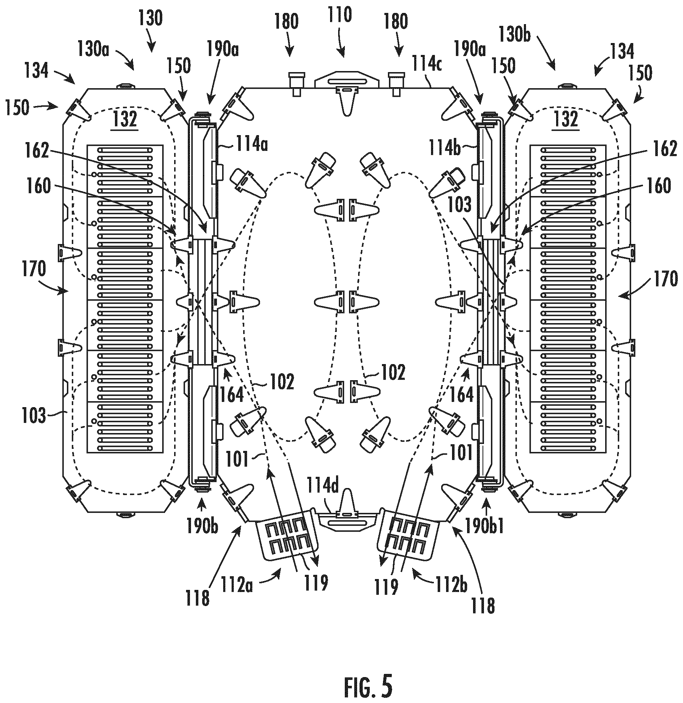

FIGS. 1 and 5 illustrate the fiber storage assembly 100 in an open configuration, FIGS. 2 and 3 illustrate the fiber storage assembly 100 with the first splice tray 130a moved to a closed configuration. FIG. 4 illustrates the fiber storage assembly 100 with both the first splice tray 130a and the second splice tray 130b in a closed configuration. It is noted that the closed configuration depicted is a two-layer tri-fold configuration. Other configurations are contemplated and possible, such as a two layer bi-fold configuration (e.g., one slack storage tray and one splice tray) and a 3 layer trifold configuration (e.g., one slack storage tray and two overlapping splice trays).

In embodiments, a latch 180 may be provided and configured to hold at least one splice tray of the one or more splice trays 130 in the closed configuration. For example, a latch 180 may be coupled to a side wall of the one or more side walls 114 of the slack storage tray 110. A catch 181 may be provided (such as formed) in a corresponding position of the one or more splice tray side walls 134. For example, the catch 181 may be a hole, detent, or the like formed within a side wall of the one or more splice tray side walls 134. In the closed position, the latch 180 may snap onto or otherwise engage the catch 181 to hold the one or more splice trays 130 in a closed position. For example, there may be a latch 180 and catch 181 corresponding to each splice tray 130 of the one or more splice trays 130 (such as a first latch corresponding to the first splice tray 130a and a second latch corresponding to the second splice tray 130b. In the depicted embodiment, the latch(es) 180 are illustrated as positioned along the first lateral side wall 114c of the slack storage tray 110, but may be positioned at other locations. In some embodiments, the latch 180 may be a spring biased pin which is biased to an extended position when within the catch 181 to hold the splice tray in the closed configuration. Accordingly, in embodiments, to release the latch 180 from the catch 181, the technician may simply pull the pin from the catch 181 to release the splice tray 130. Other latching mechanism are contemplated and possible, such as rotational latches, magnetic latches, etc.

In the closed position the splice storage volume 131 is directed toward the slack storage volume 111. Once moved to the open configuration, both the splice storage volume 131 and the slack storage volume 111 face the same direction so as to be simultaneously accessible by a technician without needing to flip back and forth between the two volumes. Accordingly, access to the stored fiber lengths in the splice storage volume 131 and the stored splices are simultaneously viewable thereby improving access and ease of service of connections.

As noted above, both the one or more splice trays 130 and the slack storage tray 110 may include a plurality of clip mounting locations 115, 135 to which a clip may be mounted. In embodiments, a plurality of clips 150 are couplable to the slack storage tray 110, the one or more splice trays 130, or both. As best depicted in FIG. 3, each clip 150 may include a hold down finger 152 for engaging and holding done one or more portions of a fiber cable. In embodiments, the hold down finger 152 may extend a clip base 154. The clip base 154 may define a recess 155 allowing the clip base 154 to be mounting to the various clip mounting locations. For example, a side wall 114, 134 or a tab 116 may fit (such a via interference fit) within the recess 155 thereby securing the clip 150 to the side wall 114, 134 or tab 116. The clip 150 may be formed of any suitable material. In embodiments, the clip 150 may be formed of a flexible material (e.g., polymer or rubber) allow the clip 150, such as the hold down finger 152 some flexure for mounting and manipulating for securement of fibers. It is noted the clips 150 may be mounted to the various trays described herein in a modular manner as determined by a technician to provide whatever pattern desired or needed. Accordingly, clips 150 may be added or removed as necessary or desirable. For example, in the splice trays 130 the clips 150 may be arranged around the perimeter of the splice trays 130 to hold down fibers routed around the perimeter.

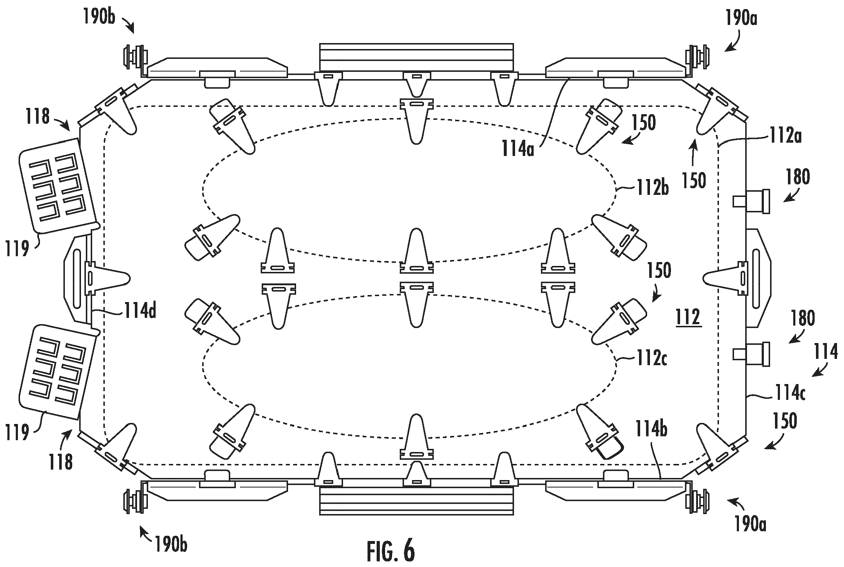

In the slack storage tray 110, the clips 150 may be mounted so as to define a plurality of slack storage zones. With reference to FIG. 6, an example arrangement of clips 150 is depicted to define three slack storage zones. The first slack storage zone 112a is defined along the one or more side walls 114. A second zone 112b and a third storage zone 112c are shown within the first slack storage zone 112a, such as within a perimeter of the first slack storage zone 112a. The hold down fingers 152 of the plurality of clips 150 are arranged to define each zone so as to hold slack arranged within the zone about the internal perimeter of the zone. A user may arrange clips 150 as desired to provide desired zones. For example, where only one splice tray 130 is used, a single slack storage zone may be sufficient to organize slack. However, where multiple splice trays are used the second zone 112b and the third zone 112c may be useful in ensuring fibers routed to each tray are isolated from fibers of the other tray in separate slack storage zones. In some embodiments the outer first slack storage zone may be more generalized storage (for each of the splice trays) and then the inner two storage zones may separate the slack stored in the first slack storage zone into specific zones as corresponding to the trays in which the fibers are spliced. In any case, such arrangement may be adjusted as needed by the technician.

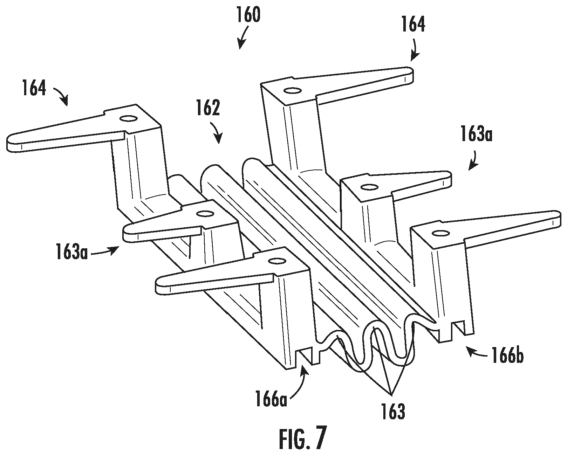

Referring back to FIG. 5, routing of fibers through the fiber storage assembly 100 is schematically depicted. In embodiments, fibers may enter the slack storage tray 110 via the one or more fiber entries/exits 118, slack may be stored, such as with a desired zone, and may then be routed to the particular splice tray 130. A flexible fiber guide 160 may be provided which may assist in routing the fiber to the desired splice tray 130a or 130b. For example a first flexible fiber guide may couple the slack storage tray 110 to the first splice tray 130a and a second flexible fiber guide may couple the slack storage tray 110 to the second splice tray 130b, such as at a position opposite the first flexible fiber guide. A flexible fiber guide 160 is illustrated in isolation in FIG. 7. For example, the flexible fiber guide 160 may include a spine 162 and a plurality of guiding tabs 164. In embodiments, the spine 162 may be a corrugated spine. For example, the corrugated spine may be arranged such that the corrugations 163 extend parallel to a pivot axis of splice tray 130. The corrugated spine may allow the flexible fiber guide 160 to extend and contract while rotated between the open or closed position thereby avoiding creation of pinch points or too small bend radiuses for the fibers routed across the corrugated spine. It is noted that in some embodiments, the spine is not corrugated may be a smooth, flexible spine.

Extending from the spine 162 may be the plurality of guiding tabs 164. The plurality of guiding tabs 164 may extend from opposite longitudinal edges of the spine 162. The guiding tabs 164 may face outward from the spine 162 and act as hold-down tabs described above. In embodiments, the guiding tabs 164 may have various heights and or various lengths. For example, in the illustrated embodiment, the flexible fiber guide 160 includes three guiding tabs on a first side and three guiding tabs on a second side opposite the first side. In embodiments a central tab 163a of each group of three is shorter in height and length than the adjacent tabs. The shorter central tab 163a may assist in holding slack lower to make additional room for fiber crossing through the flexible fiber guide 160.

In embodiments, similar to the plurality of tabs 116, the flexible guide, such as the spine 162 may define a recess for mounting to the one or more side walls 114, 134 of the slack storage tray 110 and the splice tray 130. For example, the flexible fiber guide 160 may include a first recess 166a for engaging the one or more side walls 114 of the slack storage tray 110 and a second recess 166b for engaging the one or more side walls 114 of the splice tray 130. Such engagement may be an interference fit to frictionally hold the flexible guide to the slack storage tray 110 and the splice tray 130.

In embodiments, the flexible fiber guide 160 is positioned between the first hinge 190a and the second hinge 190b, through other arrangements are contemplated and possible.

The flexible guide may be formed of any suitable material such as rubber, thermoplastic elastomer, or the like. The flexible guide may be molded or formed through any suitable manufacturing process.

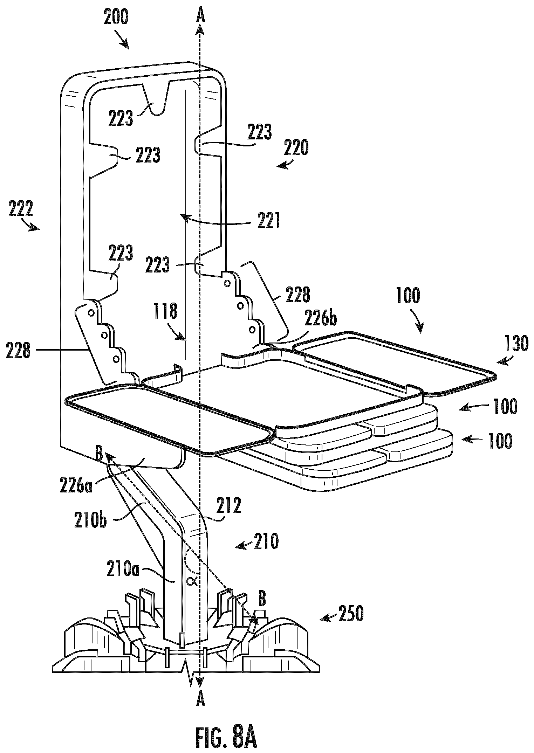

Referring now to FIGS. 8A-8C, a plurality of fiber storage assemblies 100 are illustrated mounted to a mounting bracket 200 so as to provide a fiber storage system. It is noted that the fiber storage assemblies 100 are illustrated schematically and may depict fewer or different features from those described above. For example, the fiber storage assemblies 100 are illustrated having a single fiber entry/exit 118. Moreover, for simplicity the plurality of clips, splice holders, flexible fiber guides, etc. are not depicted. However, the fiber storage assemblies 100 may include any or all of the features described above without departing from the scope of the present disclosure.

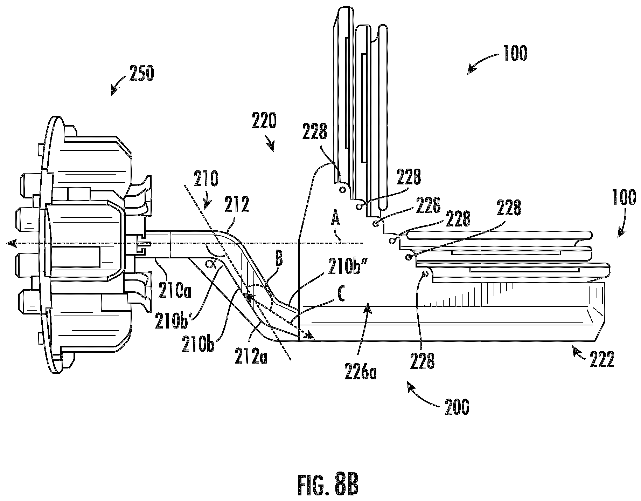

For example, the mounting bracket 200 may include an arm 210 coupleable to a structure 250 such as within a vault or other location. Coupled to the arm 210 may be holder 220. The arm 210 may have one or more bends 212 which separates the arm 210 into a proximal portion 210a and one or more distal portions 210b. The proximal portion 210a may be mounted to the structure 250 via any suitable coupling (e.g., fasteners, clamps, etc.). The proximal portion 210a may define a first axis A. The first axis A may be parallel to a horizontal or vertical axis. For example, FIG. 8A illustrates the first axis A arranged in parallel to a vertical axis and FIG. 8B illustrates the first axis A arranged in parallel to a horizontal axis. The one or more distal portions 210b may define a second axis B. The second axis B may be arranged at some angle α relative to the first axis A. Such angle α may be greater than 90 degrees, such as between 90 degrees and 180 degrees. In embodiments, the angle α may be an obtuse angle.

In some embodiments, the holder 220 may be mounted to the one or more distal portions 210b. The arm 210 may have an additional bend 212a which separates one or more distal portions 210b into a first distal portion 210b' and a second distal portion 210b". The second axis B may be defined by the first distal portion 210b' and the second distal portion 210b" may define a third axis C. The third axis C may be arranged at some angle β. Such angle β may be greater than 90 degrees, such as between 90 degrees and 180 degrees. In embodiments, the angle β may be an obtuse angle. The second distal portion 210b" may extend between the first distal portion 210b' and the holder 220 and couple the first distal portion 210b' to the holder 220. As will be described further below, the bends 212, 212a may allow the mounting bracket 200 to have an overall lower profile than if the arm 210 was straight without bends.

The holder 220 may be mounted to the distal end of the arm 210, such as the distal portion 210b (e.g., the second distal portion 210b"). The holder 220 may be mounted to the arm 210 via any suitable fashion (e.g., welding, brazing, fasteners, clamps, etc.). The holder 220 may include a base portion 222 coupled to the arm 210, a first mounting arm 226a and a second mounting arm 226b. The holder 220 may include a greater or fewer number of components without departing from the scope of the present disclosure.

The base portion 222 may define a cable cavity 221 through which cables or fibers may extend before being routed into or out of the plurality of fiber storage assemblies 100. In embodiments, extending from the base portion 222 over the cable cavity 221 may be a plurality of retention fingers 223. The plurality of retention fingers 223 may aid in maintain a cable slack within the cable cavity 221. For example, a cable, or cable sub-unit may be routed around a perimeter of the cable cavity 221 and held therein via the retention fingers 223.

The first mounting arm 226a and the second mounting arm 226b may extend from the base portion 222 on opposite sides of the cable cavity 221. The first mounting arm 226a and the second mounting arm 226b may be formed integrally with the base portion 222 or mounted thereto via any suitable fashion (e.g., fasteners, welding, etc.). The first mounting arm 226a and the second mounting arm 226b may collectively define a plurality of mounting zones 228 to which the fiber storage assemblies 110 may be coupled. For example, each mounting zone 228 may be positioned in stepped relationship to one another as depicted. Such spaced and stepped relationship may allow for additional room for fibers to be routed into or from the fiber storage assemblies 100. In embodiments, each mounting zone 228 may be have pivot attachments or holes for receiving a pivot point from fiber storage assembly 100, such as coupled to the slack storage tray 110. Such pins may be spring biased pins, for example. That is, extending from the one or more side walls 114, such as the longitudinal side walls 114a, 114b, the lateral side walls 114c, 114d, or the like, may be one or more pins. Such pins may be receivable within the pivot attachments or holes and allow the fiber storage assembly 100 to pivot between a horizontal and a vertical position.

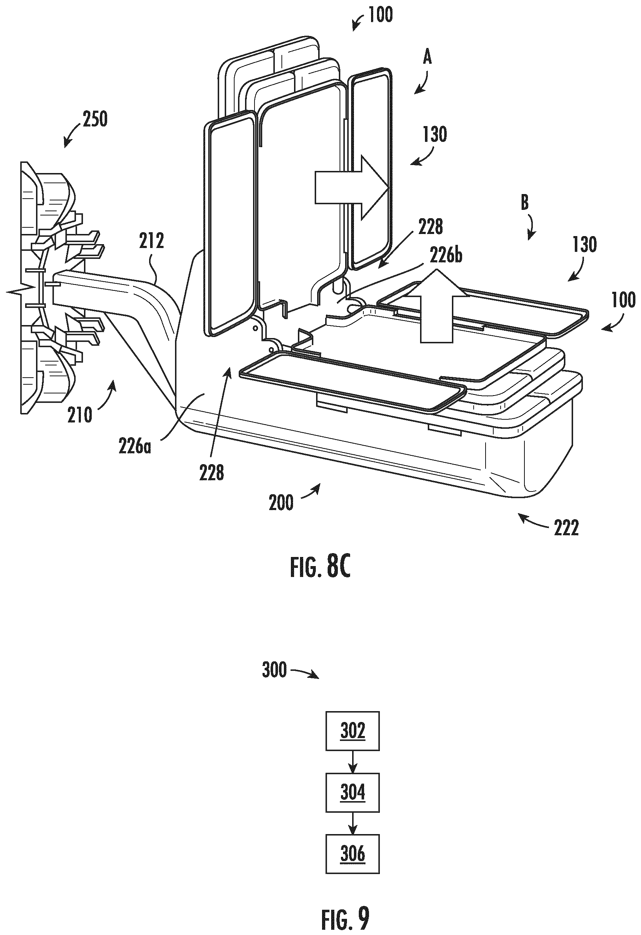

In embodiments, a technician may be able to flip through the various fiber storage assemblies 100 to access a desired fiber storage assembly 100. The fiber storage assembly 100, may then be opened. Referring to FIG. 8C, it is contemplated that a technician may open the fiber storage assembly 100 in a vertical orientation as shown in configuration A or a horizontal configuration as depicted in configuration B. That is the fiber storage assembly 100 may be mounted to the mounting bracket 200 in a face down orientation (such that the fiber storage assembly 100 is accessible to be opened in configuration A) or a face up orientation (such that the fiber assembly is accessible to be opened in configuration B). In some embodiments, it is contemplated the multiple orientations may be desirable to allow for access and splicing between fiber storage assemblies 100.

Referring now to FIG. 9 a flowchart depicting a method 300 for routing an optical fiber 101 within a fiber storage assembly 100, such as described above is generally depicted. The method 300 may have a greater or fewer number of steps, taken in any order, without departing from the scope of the present disclosure.

At block 302 the method 300 include arranging a slack portion 102 of the optical fiber 101 within the slack storage tray 110, such may be arranged as generally indicated in FIG. 5. The slack portion 102 generally include a fiber with cladding, but separated with a cable jacket and strengthening fibers removed. The slack portion 102 may be routed through the inlet and into any of the three zones described above. At block 304 the method 300 includes routing a splice portion 103 of the optical fiber 101 to a first splice tray 130a pivotally coupled to the slack storage tray 110 or the second splice tray 130b pivotally coupled to the slack storage tray 110 and securing the splice portion 103 within the first splice tray 130a or the second splice tray 130b, such as with the one or more splice holders 170. The splice portion 103 generally includes at least a portion of the optical fiber 101 with the cladding removed. In embodiments, the splice portion 103 may be routed through the flexible fiber guide 160 as described above. For example, and as schematically depicted in FIG. 3 the optical fiber 101 may be routed from the second zone 112b and into the splice tray 130 across the flexible fiber guide 160. In some embodiments, the optical fiber 101 may cross the flexible fiber guide 160 at an oblique angle relative to a horizontal axis. Such angling may provide larger bend radiuses for the optical fiber 101 as it is routed through the flexible fiber guide 160. An optical fiber 101 may be similarly routed from the third zone 112c or the first zone into either the first or second splice tray 130a, 130b. Other routings are contemplated and possible. In some embodiments, the method 300 may further include at block 306, after routing (and splicing if needed), closing the first tray 130a and or the second tray 130b to the closed configuration such that the splice portion faces the slack portion.

Embodiments of the present disclosure are further described with respect to the following numbered clauses:
1. A fiber storage assembly comprising: a slack storage tray defining a slack storage volume configured to store fiber slack of an optical fiber; and one or more splice trays pivotally coupled to the slack storage tray and moveable between a closed configuration enclosing the slack storage volume and open configuration exposing the slack storage volume.
2. The fiber storage assembly of clause 1, comprising a latch configured to hold at least one splice tray of the one or more splice trays in the closed configuration.
3. The fiber storage assembly of clause 2, wherein the latch is coupled to the slack storage tray and the at least one splice tray comprises a catch that is engaged by the latch in the closed configuration.
4. The fiber storage assembly of any preceding clause, wherein the one or more splice trays comprises a first splice tray and a second splice tray.
5. The fiber storage assembly of clause 4, wherein the first splice tray and the second splice tray fold over the slack storage tray in a tri-fold, two-layer configuration.
6. The fiber storage assembly of clause 5, further comprising a first latch configured to hold the first splice tray in the closed configuration and a second latch configured to hold the second splice tray in the closed configuration.
7. The fiber storage assembly of any preceding clause comprising a plurality of clips couplable to the slack storage tray, the one or more splice trays, or both, the plurality of clips comprising a hold down finger for engaging and holding done one or more portions of the optical fiber.
8. The fiber storage assembly of clause 7, wherein the slack storage tray comprises a plurality of slack storage zones, each defining a plurality of clip mounting locations, wherein the plurality of clips are removably couplable to the plurality of clip mounting locations.
9. The fiber storage assembly of any preceding clause, wherein the slack storage tray defines a first slack storage zone, a second slack storage zone and a third slack storage zone.
10. The fiber storage assembly of any preceding clause, further comprising a flexible fiber guide coupling the one or more splice trays to the slack storage tray.
11. A fiber storage assembly comprising: a slack storage tray defining a slack storage volume configured to store fiber slack of an optical fiber; a first splice tray pivotally coupled to the slack storage tray; and a second splice tray pivotally coupled to the slack storage tray opposite the first splice tray, wherein each of the first splice tray and the second splice tray are rotatable from a closed configuration toward one another and an open configuration away from one another.
12. The fiber storage assembly of clause 11, wherein the slack storage tray defines a first slack storage zone, a second slack storage zone and a third slack storage zone, the second and third slack storage zones being positioned within a perimeter of the first slack storage zone.
13. The fiber storage assembly of any of clauses 11 or 12, wherein the first splice tray and the second splice tray fold over the slack storage tray in a tri-fold, two-layer configuration.
14. The fiber storage assembly of any of clauses 11-13, further comprising a first flexible fiber guide coupling the first splice tray to the slack storage tray and a second flexible fiber guide coupling the second splice tray to the slack storage tray.
15. The fiber storage assembly of clause 14, wherein each of the first flexible fiber guide and the second flexible fiber guide comprises a corrugated spine and a plurality of guiding tabs coupled to the corrugated spine.
16. A fiber storage system comprising: a fiber storage assembly according to any of the preceding claims, and a mounting bracket, wherein the fiber storage assembly is pivotally coupled to the mounting bracket.
17. The fiber storage system of clause 16, wherein the mounting bracket comprises a plurality of mounting zones to which the fiber storage assembly is removably couplable.
18. The fiber storage system of clause 17, wherein the plurality of mounting zones comprise pivot attachments wherein each pivot attachment of a mounting zone is positioned in stepped relationship to an adjacent pivot attachment.
19. A method for routing an optical fiber within a fiber storage system comprises: arranging a slack portion of the optical fiber within a slack storage tray; routing a splice portion of the optical fiber to a first splice tray pivotally coupled to the slack storage tray or a second splice tray pivotally coupled to the slack storage tray and securing the splice portion within the first splice tray or the second splice tray; and pivoting the first splice tray and the second splice tray to a closed configuration such that the splice portion faces the slack portion.
20. The method of clause 19, wherein routing the splice portion to the first splice tray or the second splice tray comprises routing the splice portion through a flexible fiber guide, the flexible fiber guide comprising a corrugated spine and a plurality of guiding tabs coupled to the corrugated spine.

It should now be understood embodiments of the present disclosure are directed to fiber storage assemblies, systems, and methods to provide improved fiber splicing, storage, and/or organization. In particular, in embodiments allow for fiber slack to be conveniently stored while providing easy access for a technician creating or modifying spliced connections held by the one or more splice trays.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A fiber storage assembly comprising:
a slack storage tray defining a slack storage volume configured to store fiber slack of an optical fiber; and
one or more splice trays pivotally coupled to the slack storage tray and moveable between a closed configuration enclosing the slack storage volume and open configuration exposing the slack storage volume.

2. The fiber storage assembly of claim 1, comprising a latch configured to hold at least one splice tray of the one or more splice trays in the closed configuration.

3. The fiber storage assembly of claim 2, wherein the latch is coupled to the slack storage tray and the at least one splice tray comprises a catch that is engaged by the latch in the closed configuration.

4. The fiber storage assembly of any of claims 1 to 3, wherein the one or more splice trays comprises a first splice tray and a second splice tray.

5. The fiber storage assembly of claim 4, wherein the first splice tray and the second splice tray fold over the slack storage tray in a tri-fold, two-layer configuration.

6. The fiber storage assembly of claim 5, further comprising a first latch configured to hold the first splice tray in the closed configuration and a second latch configured to hold the second splice tray in the closed configuration.

7. The fiber storage assembly of any preceding claim further comprising a plurality of clips couplable to the slack storage tray, the one or more splice trays, or both, the plurality of clips comprising a hold down finger for engaging and holding done one or more portions of the optical fiber.

8. The fiber storage assembly of claim 7, wherein the slack storage tray comprises a plurality of slack storage zones, each defining a plurality of clip mounting locations, wherein the plurality of clips are removably couplable to the plurality of clip mounting locations.

9. The fiber storage assembly of any preceding claim, wherein the slack storage tray defines a first slack storage zone, a second slack storage zone and a third slack storage zone.

10. The fiber storage assembly of any preceding claim, further comprising a flexible fiber guide coupling the one or more splice trays to the slack storage tray.

11. A fiber storage assembly comprising:
a slack storage tray defining a slack storage volume configured to store fiber slack of an optical fiber;
a first splice tray pivotally coupled to the slack storage tray; and
a second splice tray pivotally coupled to the slack storage tray opposite the first splice tray, wherein each of the first splice tray and the second splice tray are rotatable from a closed configuration toward one another and an open configuration away from one another.

12. The fiber storage assembly of claim 11, wherein the slack storage tray defines a first slack storage zone, a second slack storage zone and a third slack storage zone, the second and third slack storage zones being positioned within a perimeter of the first slack storage zone.

13. The fiber storage assembly of claim 11 or claim 12, wherein the first splice tray and the second splice tray fold over the slack storage tray in a tri-fold, two-layer configuration.

14. The fiber storage assembly of any of claims 11 to 13, further comprising a first flexible fiber guide coupling the first splice tray to the slack storage tray and a second flexible fiber guide coupling the second splice tray to the slack storage tray.

15. The fiber storage assembly of claim 14, wherein each of the first flexible fiber guide and the second flexible fiber guide comprises a corrugated spine and a plurality of guiding tabs coupled to the corrugated spine.
